# EUROPEAN PATENT SPECIFICATION

(11) **EP 1 619 077 B1**
(45) Date of publication and mention of the grant of the patent: **21.11.2007**
(21) Application number: 05015915.1
(22) Date of filing: 21.07.2005
(51) Int. Cl.: B60R 5/04

(54) **Cargo room structure for vehicle**
Gepäckraumstruktur für ein Fahrzeug
Structure d'espace de chargement pour un véhicule

(30) Priority: 22.07.2004 JP 2004214742
(43) Date of publication of application: 25.01.2006
(73) Proprietor: MITSUBISHI JIDOSHA KOGYO KABUSHIKI KAISHA, Tokyo 108-8410 (JP)
(72) Inventor: Kitagawa, Yasuhiro c/o Mitsubishi Jidosha Kogya KK, Tokyo 108-8410 (JP)
(74) Representative: Vossius & Partner

(56) References cited:
- WO-A-97/41755
- DE-A1- 10 201 803
- US-A- 5 669 537
- US-A1- 2003 184 107
- PATENT ABSTRACTS OF JAPAN vol. 2003, no. 12, 5 December 2003 (2003-12-05) -& JP 2003 291732 A (HONDA MOTOR CO LTD), 15 October 2003 (2003-10-15)
- PATENT ABSTRACTS OF JAPAN vol. 1998, no. 06, 30 April 1998 (1998-04-30) -& JP 10 044872 A (HONDA MOTOR CO LTD), 17 February 1998 (1998-02-17)

## Description

The present invention relates to a cargo room structure for a vehicle including a partition member for partitioning a space in a cargo room in a rear part of the vehicle into upper and lower spaces.

Cargos of various sizes are stored in a cargo room which is formed in a rear part of a vehicle, and it is advantageous to make a cargo room floor lower in height, in order to ensure a larger capacity of the cargo room. On the other hand, in case where no cargo is stored, it is desirable to make the cargo room floor flat, in order to keep good appearance of the cargo room space and to improve comfort of passengers. Moreover, it is desirable that a height of a floor face of the cargo room floor can be varied according to objects for use.

For example, disclosed in Japanese Patent Publication No. JP-A-2001-328488 is a structure in which a package tray which is divided in a longitudinal direction of a vehicle is provided between a rear seat back and a tail gate. A length of this package tray in a lateral direction of the vehicle can be varied, by folding right and left side ends thereof, whereby a vertical position of the package tray can be changed.

Further, Japanese Patent No. 3302571 B2 discloses a structure, as shown in Fig. 17, inwhich right and left shelf-like stepped parts 120 having projection amounts A1 and A2 which are unsymmetrical to each other are formed in parts of quarter trims 110 which form side walls 100 of a cargo room opposed to each other in a lateral direction Y of a vehicle, and a cargo board 130 in a plate-like shape is mounted between the right and left shelf-like stepped parts 120 in a manner of bridging them.

After one of right and left ends of the cargo board 130 has been lifted (See marks "up"), the cargo board is withdrawn and inserted to the right and left, whereby a height of the cargo board can be adjusted. In this manner, a floor face can be shifted between an upper position fa and a lower position fb, and the cargo room space can be variably adjusted.

However, in case of an art disclosed in JP-A-2001-328488, when the package tray including a pair of front and rear cargo room partition members is shifted up and down, the package tray is unable to be operated, unless a cargo on a cargo receiving face has been once removed, and shifting operability is poor. On the other hand, in case of the cargo board 130 which is the cargo room partition member in JP-3302571, in order to vertically shift the plate-like cargo board 130 which has been locked to the shelf-like stepped parts 120 at its both ends, as shown in Fig. 17, the cargo board 130 must be withdrawn from one of the shelf-like stepped parts 120 after it has been once inclined, and then, must be mounted again by inserting it into the other shelf-like stepped part 120 after it has been inclined.

Therefore, in the art disclosed in Japanese Patent No. 3302571 as well as in the art of JP-A-2001-328488, the operation for shifting the cargo board 130 cannot be conducted, unless the cargo on the cargo receiving face of the cargo board 130 has been once removed, and shifting operability is poor.

Further, in case of employing the structure as disclosed in Japanese Patent No. 3302571 in which the cargo board 130 is withdrawn and inserted to the right and left with respect to the shelf-like stepped parts 120 having laterally unsymmetrical projection amounts A1, A2, the projection amounts A1, A2 of the shelf-like stepped parts 120 of the right and left side walls projected toward a center of the vehicle are relatively large, and accordingly, a width B of a space in the lateral direction Y of the vehicle will be decreased. This will lead to a problem that a request for securing as large cargo space as possible to store a large volume of cargo cannot be fulfilled.

JP 2003 291732 A discloses a cargo room structure for a vehicle comprising:
- a cargo room provided in a rear part of the vehicle;
- a pair of side walls opposed to each other in a lateral direction of the vehicle and forming a part of the cargo room;
- a cargo room partition member which is engaged with the pair of the side walls so as to bridge the side walls; and
- a releasing device having an operating member provided on an upper face of the cargo room partition member, the releasing device being adapted to cause the cargo room partition member to engage the pair of the side walls and release the engagement in association with operation of the operating member, whereby both side parts of the cargo room partition member can be lifted and lowered along the pair of the side walls.

The invention has been made in view of the problems as described above, and it is an object of the invention to provide a cargo room structure for a vehicle in which a cargo room partition member can be easily shifted between upper and lower positions, while a cargo is placed on the cargo room partition member, without removing the cargo from a cargo receiving face. This object can be achieved by the features defined in the claims.

A cargo room structure for a vehicle according to a first aspect of the invention is characterized in that the structure includes a cargo room provided in a rear part of the vehicle, a pair of side walls opposed to each other in a lateral direction of the vehicle and forming a part of the cargo room, a cargo room partition member which is engaged with the pair of the side walls so as to bridge the side walls, and a releasing device having an operating member provided on an upper face of the cargo room partition member, the releasing device being adapted to release the engagement between the pair of the side walls and the cargo roompartitionmember in association with operation of the operating member, whereby both side parts of the cargo room partition member can be lifted and lowered along the pair of the side walls.

A second aspect of the invention is characterized in that the cargo room partition member is divided in a longitudinal direction of the vehicle into a front partition member and a rear partition member, and the releasing device is provided on either one of the front partitionmember and the rear partition member.

A third aspect of the invention is characterized in that the cargo room partition member includes a plate-like member, and the releasing device is provided on the rear partition member.

A fourth aspect of the invention is characterized in that the pair of the side walls are formed with shelf parts on which the front partition member can be placed.

A fifth aspect of the invention is characterized in that two operating members are provided on the upper face of the cargo room partition member at a determined interval in the lateral direction of the vehicle, and the operating members are also used as handles for lifting and lowering the cargo room partition member.

A sixth aspect of the invention is characterized in that the pair of the side walls are formed with lock holes, and the releasing device includes pin members which are provided in right and left side parts of the cargo room partition member and adapted to be engaged with the lock holes, an urging member for urging the pin members in the lateral direction, and an actuating member engaged with the pin members and adapted to actuate the pin members, in association with the operation of the operating member, thereby to release the pin members from the lock holes.

According to the invention, by simple operation of the operating means, the releasing device associated with this operating means will release the engagement between the pair of the side walls and the cargo room partition member, and will make lifting and lowering operation of the cargo room partition member keeping it in a substantially horizontal position, while a cargo is mounted thereon. In this manner, the cargo room partition member can be shifted between the upper and lower positions.

Further, according to the invention, it is possible to change the cargo room into various storage modes, by moving either one of the cargo room partition members, the front partition member or the rear partition member, without removing articles on the other cargo room partition member.

Still further, according to the invention, cost reduction canbe easily attained, andshiftingoperabilitywillbe enhanced, because the cargo roompartition member has a simple shape formed of a plate-like member.

Still further, according to the invention, cost reduction can be easily attained, by employing such a simple supporting structure that the front partition member is placed on the shelf parts.

Still further, according to the invention, the operating means are also used as the handles for lifting and lowering the cargo room partition member, and there is no necessity of providing the handles separately. It is possible to lift or lower the cargo room partition member simultaneously when the engagement between the pair of the side walls and the cargo room partition member has been released, and operability will be enhanced.

Still further, according to the invention, the engagement of the pin members with the lock holes which are provided on the pair of the side wall can be conducted by the urging member, and disengagement can be conducted by the actuating member in association with the operating means. Therefore, excellent operability for moving the cargo room partition member can be obtained.

The invention is described in detail in conjunction with the drawings in which;
Fig. 1 is a schematic plan view of a wagon car to which a cargo room structure for a vehicle according to an embodiment of the invention is applied,
Fig. 2 is a side view showing an inner face of a cargo room in the wagon car in Fig. 1,
Fig. 3 shows, in perspective views, an interior of the cargo room of the wagon car in Fig. 1, (a) when an upper floor face is formed, and (b) when a lower floor face is formed,
Fig. 4 is a schematic exploded view of a rear cargo board to be employed in the cargo room structure for a vehicle in Fig. 1,
Fig. 5 shows the rear cargo board to be employed in the cargo room structure for a vehicle in Fig. 1, in which (a) is a perspective view of an essential part partly cut away, and (b) is a perspective view of an essential part of a bearing member partly cut away,
Fig. 6 is a view for explaining rotation of a backward end edge of the rear cargo board to be employed in the cargo room structure for a vehicle in Fig. 1,
Fig. 7 is a view for explaining operation of a releasing device of the rear cargo board to be employed in the cargo room structure for a vehicle in Fig. 1, in which a released state is shown above, and an engaged state is shown below,
Fig. 8 is a view for explaining a manner of moving the rear cargo board to be employed in the cargo room structure for vehicle in Fig. 1,
Fig. 9 is a schematic side view showing a state where an upper floor face f1 is formed by the front and rear cargo boards to be employed in the cargo room structure for a vehicle in Fig. 1,
Fig. 10 is a schematic side view showing a state where a lower floor face f2 is formed only by the rear cargo board to be employed in the cargo room structure for a vehicle in Fig. 1,
Fig. 11 is a schematic side view showing a state where the lower floor face f2 is formed by the front and rear cargo boards to be employed in the cargo room structure for a vehicle in Fig. 1,
Fig. 12 is a schematic side view showing a state where the rear cargo boards to be employed in the cargo room structure for a vehicle in Fig. 1 is hung on a seat back,
Fig. 13 is a perspective view of an essential part of a releasing device to be employed in the cargo room structure for a vehicle in Fig. 1,
Fig. 14 is an exploded perspective view of the releasing device to be employed in the cargo room structure for a vehicle in Fig. 1, also showing movement of a cam member when a switch member is shifted from a retreat position to a down position, by a two-dot chain line,
Fig. 15 shows an essential part of the releasing device to be employed in the cargo room structure for a vehicle in Fig. 1, in which (a) is a bottom view of the switch member, and (b) is a bottom view of a main body partly cut away,
Fig. 16 is a perspective bottom view of an essential part of the releasing device to be employed in the cargo room structure for a vehicle in Fig. 1, and
Fig. 17 is a schematic view for explaining operation of a conventional cargo room structure for a vehicle.

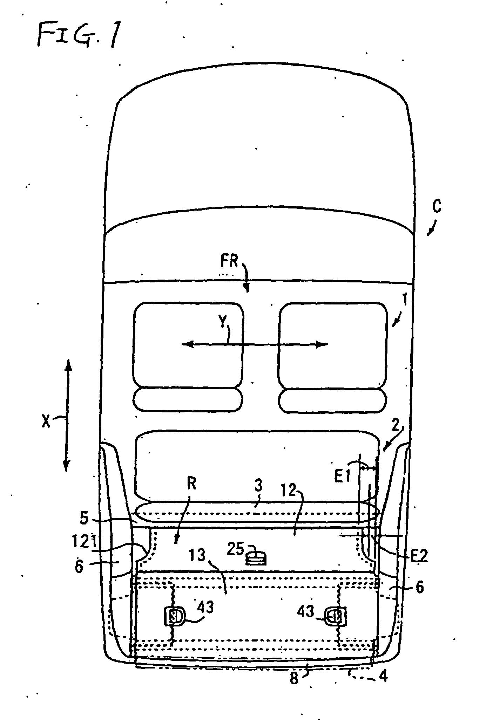

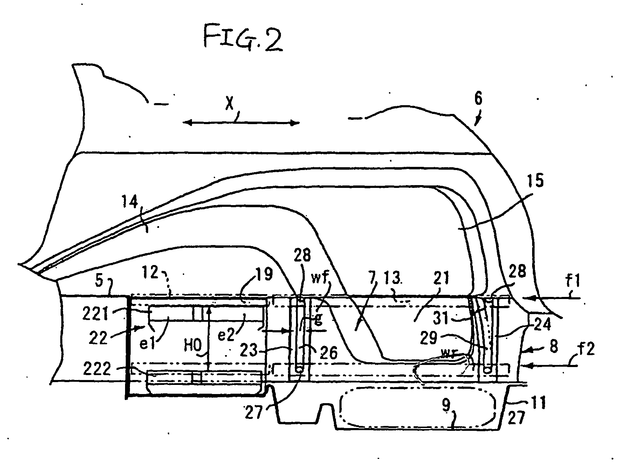

Figs. 1 and 2 show a wagon car C in which a cargo room structure for a vehicle, as an embodiment of the invention, is employed in a rear part of a vehicle body.

This wagon car C includes a vehicle room FR in which a front seat 1 and a rear seat 2 are arranged, and a cargo room R which is continued to the rear of the vehicle room FR, and secured between a seat back 3 of the rear seat 2 and a tail gate 4. The wagon car C is so constructed that a cargo M1 (See Fig. 11) can be put into the cargo room R and taken out therefrom, while the tail gate 4 is open.

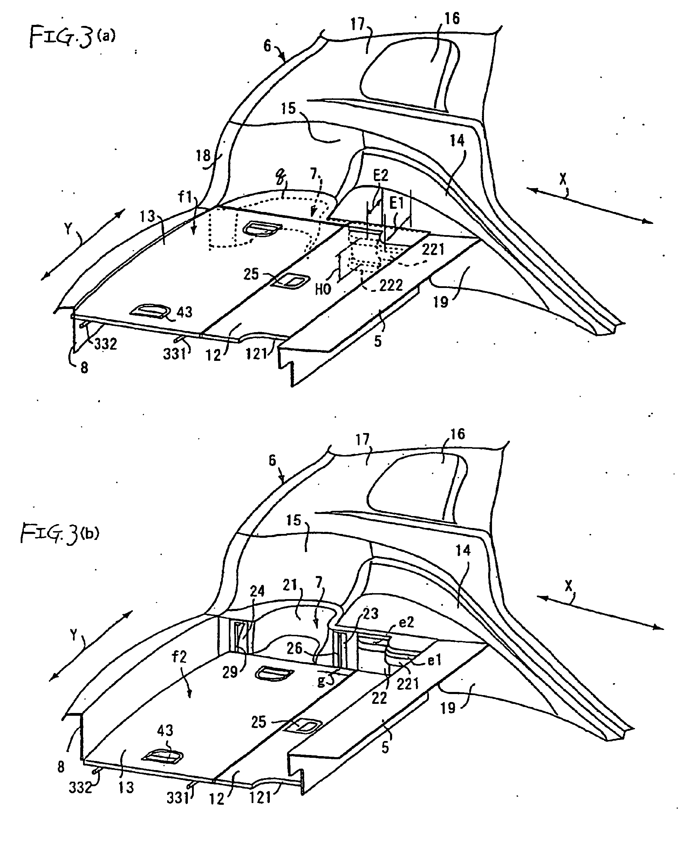

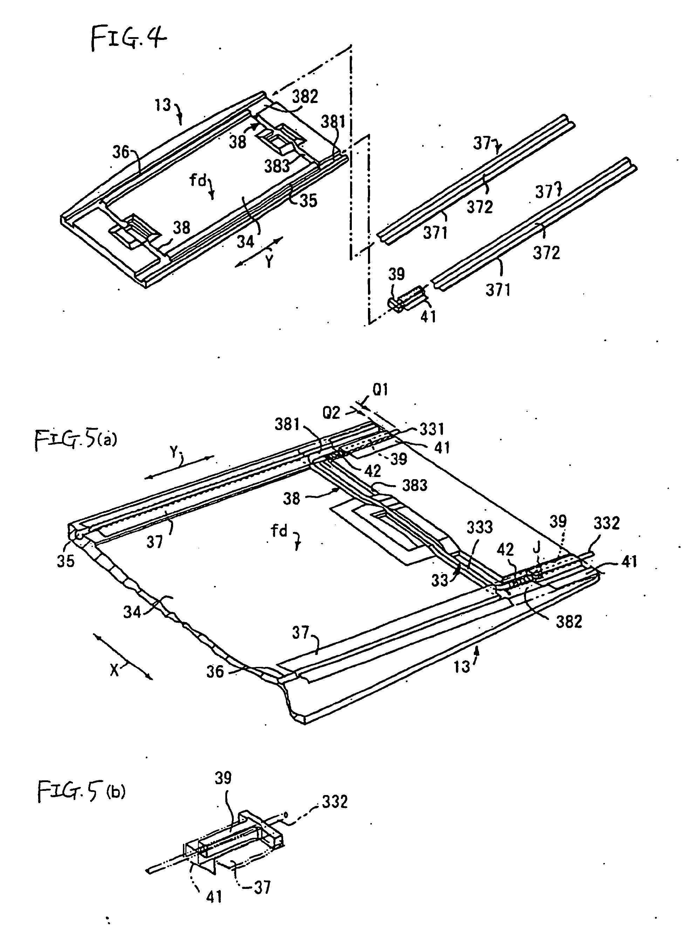

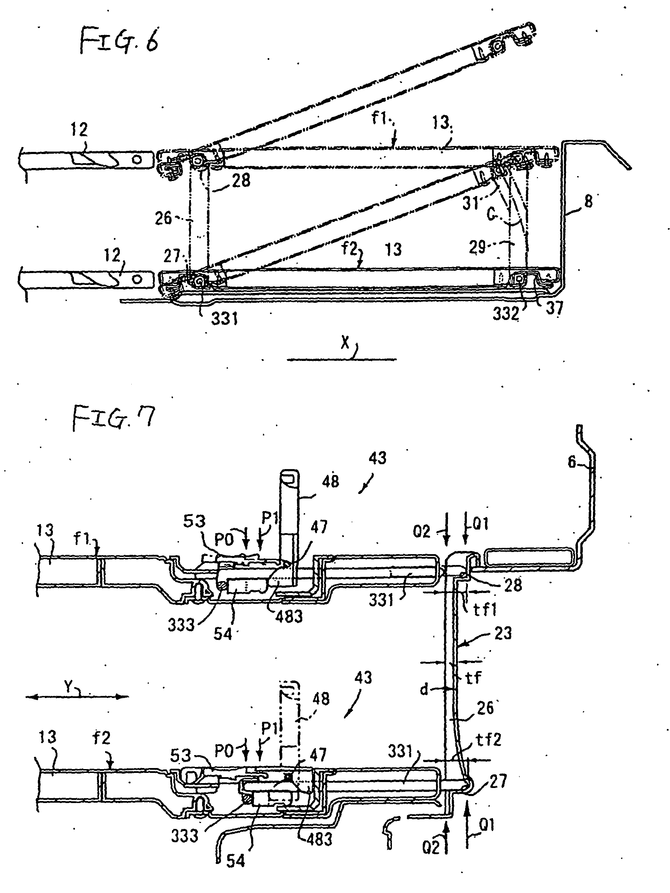

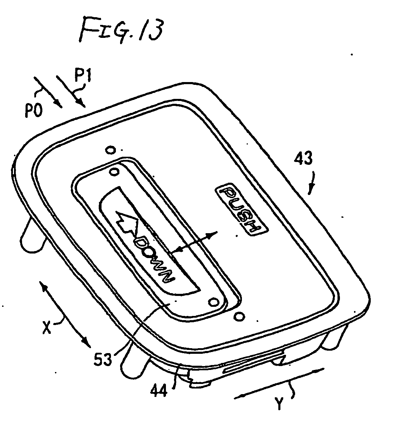

A forward part of the cargo room R in a longitudinal direction X of the vehicle is defined by a front cover member 5 and the rear seat back 3 which is positioned above the front cover member 5, and both side walls opposed to each other in a lateral direction Y of the vehicle are formed by trunk trims 6 and quarter trims 7 which are positioned below the trunk trims 6. A backward part of the cargo room R is defined by a tail end cover 8 and the tail gate 4 which is positioned above the tail end cover 8. Moreover, a floor of the cargo room R is formed of a floor member 11 which is provided with a tire house 9, and can be shifted between upper and lower floor faces f1, f2 in two steps. In this embodiment, the basic upper floor face f1 can be secured by holding a pair of front and rear cargo boards 12, 13 which are a forward partition member and a backward partition member, at an upper position (See Fig. 3(a)) which will be described below, while the lower floor face f2 can be secured by holding the pair of the front and rear cargo boards 12, 13, at a position near the floor member 11 (See Fig. 3 (b)). It is to be noted that the basic floor face f1 is so formed as to be continued to an upper face of the rear seat back 3 substantially at the same height, when the rear seat back 3 has been reclined forward (See a two-dot chain line in Fig. 9).

Both the trunk trims 6 and the quarter trims 7 below the trunk trims which form the right and left side walls are molded of resin, and are so formed as to cover inner wall sides of outer wall members (not shown) in the rear part of the vehicle body, as shown in Figs. 2 and 3. Each of the trunk trims 6 is integrally formed, including an upper swelledpart 14 covering a backward upper part of a rear wheel (not shown), and an upper concave part 15 formed behind the upper swelled part 14, an inner cover part 17 covering a peripheral edge of a rear end window 16 above the swelled part 14 and the concave part 15, and a gate cover part 18 which is continued backward from these parts.

Each of the quarter trims 7 has a shape continued from a shape of a lower part of the trunk trim 6, and includes a lower swelled part 19 continued from the upper swelled part 14, and a lower concave part 21 formed behind the lower swelled part 19. A front stepped part forming member 22 is integrally fitted to a main part of the lower swelled part 19. A front guide rail 23 and a rear guide rail 24 are integrally fitted to respective front and rear edges wf, wr of the lower concave part 21.

In this embodiment, the front and rear guide rails 23, 24 and the front and rear edges wf, wr of the lower concave part 21 are formed on a same vertical plane. Because they are formed at right and left positions opposed to each other in the cargo room R, right and left ends of the rear cargo board 13 will be prevented from interfering with the vertical planes, when the rear cargo board 13 is operated to move up and down, as described below.

The front stepped part forming members 22 opposed to each other at both sides have upper and lower curved stepped parts 221, 222 for shifting and holding right and left ends of the front cargo board 12 between the upper position and the lower position. These upper and lower curved stepped parts 221, 222 have the same shape, and are formed apart by a step difference HO, as shown in Fig. 2. Each of the upper and lower curved stepped parts 221, 222 has a forward portion e1 projected toward the center of the vehicle body by a projection amount E1 (See Fig. 3 (a)), and a backward portion e2 projected by a projection amount E2 which is smaller than the projection amount E1.

The front cargo board 12 whose right and left ends are engaged with the upper and lower curved stepped parts 221, 222 is molded of resin in a shape of an elongated plate, as shown in Figs. 1 and 3. The front cargo board 12 is integrally provided with a manually operating member 25 for board withdrawing operation at its center in the lateral direction Y of the vehicle, that is, a longitudinal direction of the front cargo board 12, near a backward end thereof. Both the right and left ends of the front cargo board 12 are cut away in a curved shape so as to follow the shape of the upper and lower curved stepped parts 221, 222. In other words, both the right and left ends of the front cargo board 12 are formed with curved engaging edges 121 which are cut away larger at a front side than at a rear side.

The front cargo board 12 having the above described curved engaging edges 121 is moved toward the upper or lower curved stepped parts 221, 222, according to necessity. On this occasion, an operator pulls out the front cargo board 12 backward from one of the upper and lower curved stepped parts 221, 222, by handling the manually operating member 25 for board withdrawing operation, and then, pushes the front cargo board 12 forward from the back so as to insert it into the other upper and lower curved stepped parts 221, 222, thus enabling the front cargo board 12 to be easily shifted between the upper and lower positions.

The front and rear guide rails 23, 24 which are provided at the front and rear edges wf, wr of the lower concave part 21, as shown in Fig. 2, are molded of hard resin, and are integrally attached to the front and rear edges wf, wr respectively by fastening means which is not shown. Particularly, faces of the front and rear guide rails 23, 24 opposed to the cargo room are made flush with the front and rear edges wf, wr.

As shown in Figs. 2, 7, and 8, the front guide rail 23 is formed with a front groove 26 having a groove width g and extending straightly in a vertical direction. The front groove 26 has a groove depth tf, and includes, as shown in Fig. 7, a lower end hole-like socket 27 having a groove depth tf2, an upper end stepped socket 28 having a groove depth tf1, and a curved part d having a shallow depth interconnecting them. A lower end of the curved part d is so formed as to be gradually decreased in groove depth from the lower end hole-like socket 27 which is a lock hole, and accordingly, a front pin part 331, which will be described below, can be retreated and displaced, when the rear cargo board 13 is forcibly pulled up.

The rear guide rail 24 is formed with a rear groove 29 extending upwardly in a bifurcated shape, as shown in Fig. 2. The rear groove 29 has a groove depth tf which is substantially the same as the groove depth tf of the front groove 26, as shown in Fig. 7. Specifically, the rear groove 29 also includes the lower end hole-like socket 27 having the groove depth tf2, the upper end stepped socket 28 having the groove depth tf1, and the curved part d having a shallow depth interconnecting them. An arc-like diverged part 31 having a shallow depth is formed at an upwardly and forwardly diverged position (See Fig. 2), and an upper end thereof is so formed as to have a slightly increased depth.

As shown in Fig. 2, the arc-shaped diverged part 31 has such a shape that in a state where the front pin part 331 of a C-shaped pin 33, which will be described below, of the cargo board 13 is engaged with the lower end hole-like socket 27, when a backward edge of the rear cargo board 13 is rotated (See Fig. 6), the arc-shaped diverged part 31 follows an orbit C which is drawn by a rear pin part 332 of the C-shaped pin 33. In short, the rear cargo board 13 can be opened or closed around the front pin part 331 as a rotation axis, in either case where the cargo board 13 is in the upper position or in the lower position.

The front and rear pin parts 331, 332 of the C-shaped pin 33 on the front and rear rails 23, 24 as described above can make sliding movement along the front and rear grooves 26, 29.

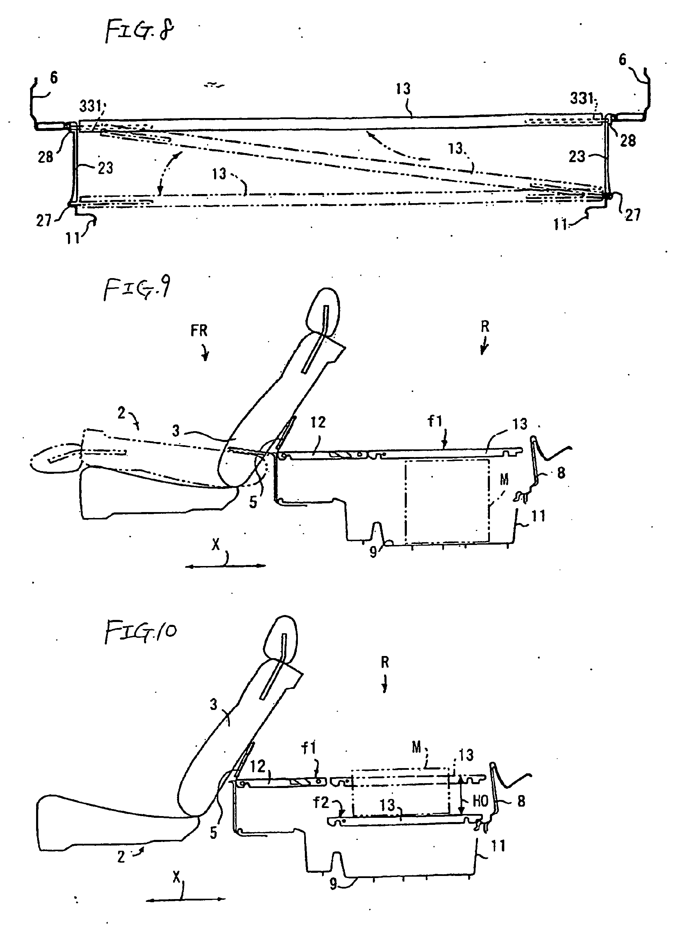

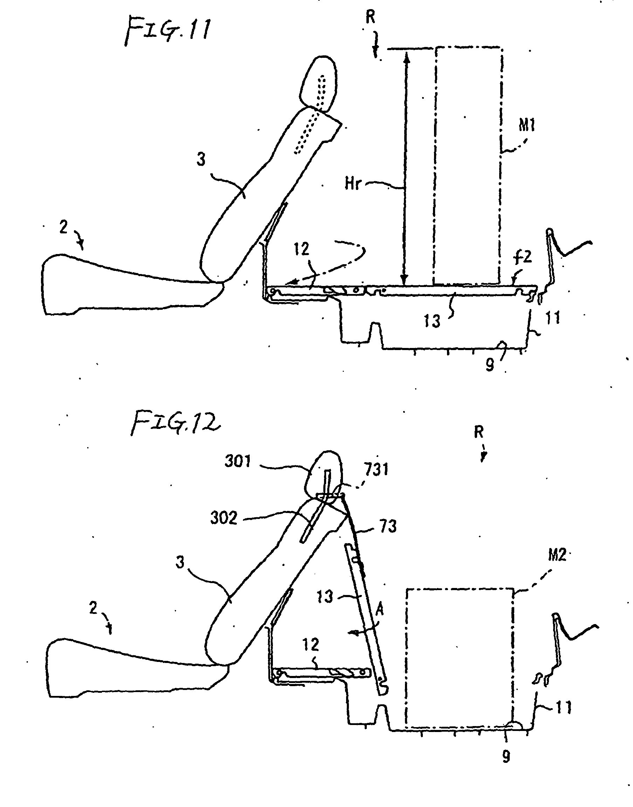

The rear cargo board 13 which is held in a state where the C-shaped pin 33 has been shifted to be engaged with the lower end hole-like socket 27 or the upper end stepped socket 28 is molded of resin in a shape of an elongated plate having a large wall thickness. As shown in Figs. 3 (a) and 3(b), the rear cargo board 13 has a forward edge which is so shaped as to be mated with a backward edge of the front cargo board 12, a backward edge which is so shaped as to follow an inner wall face of the tail end cover 8, and both side edges which are so shaped as to follow front and rear edges of the quarter trims 7 and the faces of the front and rear guide rails 23, 24 opposed to the cargo room. Sign q in Fig. 3 represents a side lid for covering the lower concave part 21. As shown in Figs. 4 and 5, the cargo board 13 is further formed with front and rear engaging grooves 35, 36 in a concave shape, on a bottom wall face fd of its board body 34 near forward and backward edges thereof. Front and rear brackets 37 which are reinforcing members are respectively fitted to these front and rear engaging grooves 35, 36. Each of the brackets 37 is a linear member formed of metal, and has a hat-like shape in cross section provided with a groove 372 and flange parts 371. These front and rear brackets 37 enhance rigidity of the rear cargo board 13 having their flange parts 371 fixed to the board body 34 with a plurality of screws.

Additionally, the cargo board 13 receives and holds the C-shaped pins 33 near both side edges on the bottom wall face fd of the board body 34, as shown in Figs. 4 and 5(a). Each of the C-shaped pins 33 is formed substantially in a C-shape in its entirety, including a pair of the front and rear pin parts 331, 332 which can slide in the lateral direction Y of the vehicle, that is, the direction of the front and rear engaging grooves 35, 36, and an intermediate part 333 which integrally interconnects the front and rear pin parts 331, 332 and extends in a lateral direction of the board body 34.

A pin receiving recess 38 for receiving the C-shaped pin 33 has forward and backward ends which are formed in an inward area sandwiched between the front and rear engaging grooves 35, 36. The pin receiving recess 38 includes front and rear pin receiving parts 381, 382 which are superposed on the front and rear engaging grooves 35, 36, and an intermediate part 383 interconnecting them. As shown in Fig. 5 (b), the front and rear pin parts 331, 332 which are slidably covered with bearing members 39 are respectively disposed in the front and rear pin receiving parts 381, 382 near the side edges of the board body 34. Metallic cover members 41 are respectively superposed on end parts of the brackets 37 and welded, and then, fixed with screws to the board body of the rear cargo board 13 together with the brackets 37. Coil springs 42 are respectively mounted on the pair of the front and rear pin parts 331, 332 so as to be deformed by compression between one ends of the cover members 41 and projections J of the front and rear pin parts 331, 332. In this manner, the pair of the front and rear pin parts 331, 332 are urged by the coil springs 42, and protruded outwardly in the lateral direction Y of the vehicle.

The board body 34 is provided with right and left releasing devices 43 at respective intermediate positions of the right and left pin receiving recesses 38. Each of the releasing devices 43 will release engagement between the C-shaped pin 33 and the lower end hole-like socket 27 or the upper end stepped socket 28. Inotherwords, the releasing device 43 will displace the C-shaped pin 33 by retracting it inwardly in the lateral direction Y of the vehicle.

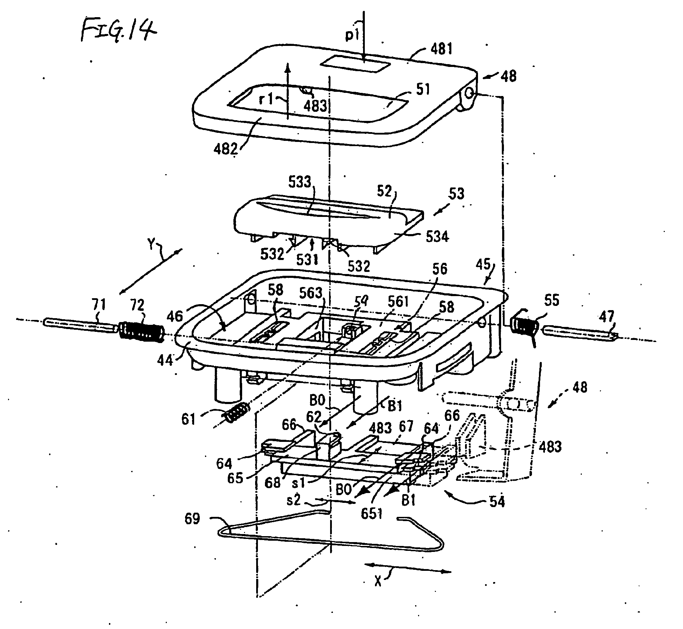

As shown in Figs. 7, 13, and 14 to 16, the releasing device 43 includes a main body 45 which is fitted to the upper floor face f1, by locking an annular flange 44, at positions near the right and left side edges so as to be substantially flush therewith, a handle (operating member) 48 which is fitted into an annular recess 46 (See Fig. 14) on an upper face of the main body 45 and held so as to rotate in a vertical direction around a handle shaft 47, a switch member 53 having an upper end projection 52 which is projected through and fitted in a rectangular center hole 51 of the handle 48, and a cam member 54. The cammember 54 is displaced in the longitudinal direction X in association with sliding movements of the C-shaped pin 33 held at the right and left ends of the board body 34 and the switch member 53 in the lateral direction Y of the vehicle, and receives a pressure by vertical rotation of the handle 48, thereby to displace the C-shaped pin 33 by pulling the intermediate part 333 toward the center of the vehicle body. The cam member 54 acts as an actuating member for actuating the C-shaped pin 33 to be released from the lock holes, in association with operation of the handle (the operating member) 48.

As shown in Figs. 13 and 14, the handle 48 which is pivotally supported on the main body 45 by means of the handle shaft 47 can be rotated (r1) upwardly, by making leverage movement of its main part 482 when an upper face 481 at an opposite side to the handle shaft 47 is pushed down (p1). A pair of operating pieces 483 are projected downward from a back side of the upper face 481. The pair of these operating pieces 483 are formed for the purpose of operating switching movements of the cam member 54. A helical spring 55 is mounted on the handle shaft 47 so as to urge the handle shaft 47 in a closing direction.

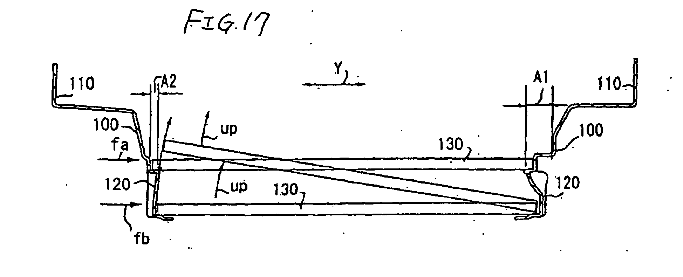

The main body 45 has a base plate 56 covering the annular recess 46 on the upper face side and substantially all parts inside the annular recess. Further, a pair of plate-like guide rails 57 (See Fig. 16) opposed to each other which are parallel to the base plate 56 with a determined gap are provided below both ends of the base plate 56 so as to extend in the lateral direction Y of the vehicle.

As shown in Fig. 14, the base plate 56 has a swelled center part 561 which is provided with a guide projection 59 and a rectangular guide hole 563. The guide projection 562 has a substantially rectangular shape. A recess 531 and projected walls 532 of the switch member 53 to be mated therewith are in slidable contact with the guide projection 562 and the rectangular guide hole 563, thereby to hold the switch member 53 so as to slide in the lateral direction Y of the vehicle.

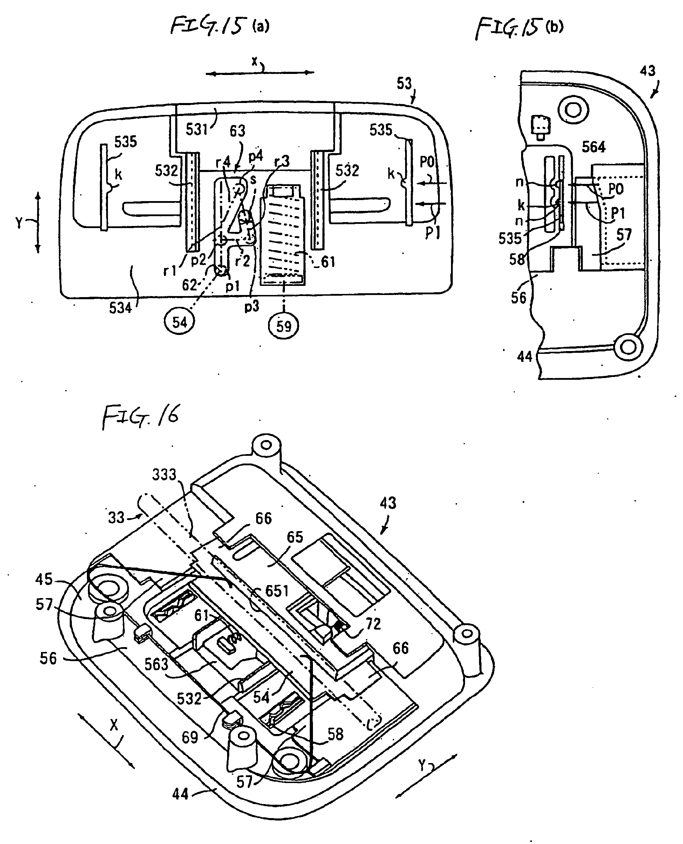

As shown in Figs. 13 and 14, the switch member 53 includes a main part 534 having a locking recess 533 provided on its upper face. The locking recess 533 imparts operating power for enabling the switch member 53 to slide between a retreat position P0 and a down position P1 outward in the lateral direction Y. As shown in Figs. 15 and 16, a pair of guide projections 535 are formed on a back face of the main part 534, at both side edges in the longitudinal direction X. The guide projections 535 are engaged with a pair of elongated grooves 58 which are formed long in the lateral direction Y on the base plate 56, whereby the switch member 53 is held so as to slide in the lateral direction Y. Each of the guide projections 535 is provided with a lug k so that the lug k may be alternatively engaged with either of two locking slots n provided at a side of the elongated groove 58. In this manner, the switch member 53 can be switched and held between the retreat position P0 and the down position P1. The two locking slots n are formed in elastic supporting parts in the base plate 56 so that engagement between the lug k and the locking slots n can be maintained with elastic force.

In addition, the switch member 53 is provided, in a part of the back face, with a return spring 61 whose one end is engaged with the projection 59 of the base plate 56 thereby to push the switch member 53 to the retreat position. The switch member 53 is further provided with a movement restricting groove 63, which will be described below, at a position of the back face where it will not interfere with the return spring 61. The movement restricting groove 63 is adapted to be slidably engaged with a movement restrictingpin 62 which will be described below.

As shown in Figs. 14 and 16, the cam member 54 is mounted on the pair of the plate-like guide rails 57 which are integrally formed in parallel on the base plate 56 of the body 45. The cam member 54 is provided with idly engaging grooves 64 which are adapted to be engaged with the plate-like guide rails 57, at both ends in the longitudinal direction X. The cam member 54 is further provided with a main frame 65 having an L-shaped engaging part 651, a pair of projections 66 projected in the lateral direction Y from both ends of a back of the main frame 65, an intermediate projection 67 arranged between the pair of the projections 66, an elastic support piece 68 projected from a face of the main frame 65 opposed to the switch member 53 (an upper face in Fig. 14), and the movement restricting pin 62 projected from a tip end of the elastic support piece 68. The pair of the projections 66 will receive pressure from the pair of operating pieces 483 of the handle 48 when they are encountered, thereby enabling the intermediate part 333 of the C-shapedpin 33 which is engaged with the L-shaped engaging part 651 to be retracted from an engaged position Q1 (See Fig. 7) to a released position Q2.

The cam member 54 is held by the pair of the opposed plate-like guide rails 57 by means of the idly engaging grooves 64 so as to slide in the lateral direction Y (See a two-dot chain line in Fig. 14), and also in the longitudinal direction X by a determined amount. Further, the cam member 54 is urged outwardly in the lateral direction Y by a flexion spring 69 which is held on the base plate 56. Still further, the intermediate projection 67 of the cam member 54 is always under pressure in the longitudinal direction X by a pressure from a pressure spring 72 which is fitted over a pin 71 projected from the base plate 56 in the longitudinal direction X. The movement restricting pin 62 is engaged with the movement restricting grooves 63 (See Fig. 15) formed on the bottom face of the switch member 53, whereby movement of the cam member 54 will be restricted.

As shown in Fig. 15, the movement restricting groove 63 on the bottom face of the switch member 53 includes a straight path r1 extending in the lateral direction Y from a base point p1, a diverged path r2 diverged from an intermediate point p2 of the straight path r1, a pressure guide path r3 extending in the lateral direction Y from an end p3 of the diverged path r2 to reach a slanted face s, and a return path r4 returning from a point p4 beyond the slanted face s to the intermediate point p2.

In this embodiment, in a state where the switch member 53 provided with the movement restricting groove 63 is held at the retreat position P0 under the pressure of the return spring 61, and in a normal state where the cam member 54 is urged outward in the lateral direction Y by means of the flexion spring 69 (See Fig. 16), the movement restricting pin 62 is held at the base point p1 of the straight path r1.

At this moment, the pair of the operating pieces 483 of the handle (the operating member) 48 are held at a position B0 (See the two-dot chain line in Fig. 14) where they are not opposed to the intermediate projection of the cam member 54, and the handle 48 will make idle operation.

On the other hand, when the switch member 53 is slid from the retreat position P0 to the down position P1 outward in the lateral direction Y, the movement restricting groove 63 on the back face of the switch member 53 is displaced in the lateral direction Y. On this occasion, the movement restricting pin 62 of the cam member 54 will move in a direction s1 to be opposed to the intermediate point p2, and the cam member 54 will move to the diverged path r2 under the pressure of the pressure spring 72 (move in a direction s2). The pair of the projections 66 of the cam member 54 will be also displaced in the longitudinal direction X. Along with this movement, the pair of the projections 66 of the cam member 54 will move to the position B1 opposed to the pair of the operating pieces 483 of the handle 48 (in the direction s2).

In this manner, the switch member 53 is switched from the retreat position P0 to the down position P1 (See Fig. 13), to shift the cam member 54 from the not opposed position B0 to the opposed position B1, as shown in Fig. 14. When the handle 48 is pulled up to rotate, the pair of the operating pieces 483 will push the intermediate part 333 of the C-shaped pin 33 by means of the pair of the projections 66, and the C-shaped pin 33 can be retracted from the engaged position Q1 to the released position Q2 (See Fig. 7).

When the cam member 54 has reached the released position Q2, the movement restricting pin 62 of the cam member 54 will move from the pressure guide path r3, and run across the slanted face s to reach the point p4 beyond the slanted face s, as shown in Fig. 15. Thereafter, when the operation of the handle 48 has been released, the cam member 54 will be returned from the down position P1 to the retreat position P0 under the pressure of the flexion spring 69 outward in the lateral direction Y. At the same time, the movement restricting pin 62 of the cam member 54 will move from the point p4 and return to the base point p1 through the return path r4 and via the intermediate point p2. According to this movement, the cam member 54 will be returned from the opposed position B1 to the not opposed position B0 against the pressure of the pressure spring 72, as shown in Fig. 14. The handle 48 will make idle operation, until the next operation of switching the switch member 53 from the retreat position P0 to the down position P1 is conducted.

The releasing devices 43 having the above described structure are arranged at two positions at both sides of the rear cargo board 13, and conduct retracting operation of the C-shaped pins 33, which are mounted at both side ends of the rear cargo board 13, toward the center of the vehicle body, that is, the released position Q2, against the resiliency of the coil springs 42 which are fitted to the C-shaped pins 33.

Now, operations for switching the cargo room into a plurality of cargo room modes in the above described cargo room structure will be described in order.

In case where the cargo room R forms an upper floor face f1 as shown in Fig. 9, the right and left ends of the front cargo board 12 are locked to the upper curved stepped parts 221 of the stepped part forming members 22, and the front end of the rear cargo board 13 is butted against the backward end of the front cargo board 12. The pair of the C-shaped pins 33 are projected from the right and left ends of the rear cargo board 13 and held at the engaged position Q1. The front and rear pin parts 331, 332 of each of the C-shaped pins 33 are respectively engaged with the upper end stepped sockets 28 of the front and rear guide rails 23, 24. Owing to this structure, in case where the rear seat back 3 is kept in a forwardly reclined position reclined from an upright position, an upper face of the rear seat back 3, and the upper faces of the front and rear cargo boards 12, 13 are made flat, whereby the large upper floor face f1 in which the vehicle room FR is continued to the cargo room R can be obtained. Therefore, it is possible to enlarge the vehicle room FR for effective utilization. Besides, a large cargo can be easily mounted on a large mounting face reaching even the upper face of the rear seat back 3. In this manner, the height of the cargo boards can be easily adjusted by the sliding movements of the C-shaped pins 33, and the large and wide cargo room R having high usability can be realized, without making easy undulations in the cargo room R.

Then, the upper floor face f1 of the rear cargo board 13 will be shifted to the lower position while the cargo M is placed on the upper floor face f1 as a cargo receiving face.

In this case, the switch member 53 of the releasing device 43 as shown in Fig. 13 is slid from the retreat position P0 to the down position P1. Then, the pair of the handles (the operating members) 48 are pulled up to rotate. In each of the handles 48, the pair of the operating pieces 483 will retract the intermediate part 333 of the C-shaped pin 33 from the engaged position Q1 to the released position Q2 by means of the pair of projections 66 of the cam member 54 thereby enabling the front and rear pin parts to be retreated from the upper end stepped sockets 28 of the front and rear guide rails 23, 24. The rear cargo board 13 which has been released in this manner will be moved to the lower position while keeping a horizontal position with the cargo M placed on the cargo receiving face. In this case, the right and left side ends of the rear cargo board 13 will be easily moved downward along the respective front and rear guide rails 23, 24 at the both sides, and will be opposed to the lower end hole-like sockets 27. When the right and left handles 48 are released in this state, the front and rear pin parts 331, 332 of the right and left C-shaped pins 33 will be projected by the resiliency of the coil spring 42, and engaged with the lower end hole-like sockets 27 which are opposed thereto.

As described above, according to this embodiment, the right and left handles 48 are used as the operating members for the releasing device, and at the same time, also used as the handles for lifting and lowering the rear cargo board 13. For this reason, there is no necessity of separately providing the handles for lifting and lowering the rear cargo board 13. It is possible to lift and lower the rear cargo board 13 simultaneously when the rear cargo board 13 (a cargo room partition member) has been disengaged from the pair of the front and rear guide rails (side wall members) 23, 24, and operability will be improved.

Further, the engagements of the C-shaped pin with the lower end hole-like sockets 27 and the upper end stepped sockets 28 (lock holes) provided on the pair of the side walls can be performed by the coil springs (urging members) 42, and the engagements can be released by the handles (operating members) 48. In this respect too, excellent operability on occasion of moving the rear cargo board 13 can be obtained.

In this case, the rear cargo board 13 is lowered by the step difference H0 from the level of the front cargo board 12, as shown in Fig. 10, and a relatively large space can be secured on a backward area of the lower floor face f2. Besides, a space below the front cargo board 12 is made open sideways, and it is possible to effectively utilize the space below the front cargo board 12, even though the cargo M is placed on the front cargo board 12.

Still further, the operator can pull out the front cargo board 12 from the upper curved stepped parts 221 backwardly, by putting his hands on the manually operating member 25 of the front cargo board 12, and then, push the front cargo board 12 forwardly to insert it into the lower curved stepped parts 222, thereby to switch the front cargo board 12 to the lower position, as shown in Fig. 11. In this manner, it is possible to obtain a relatively large area of the lower floor face f2 by combination of the front cargo board 12 and the rear cargo board 13, and to secure a large cargo room space having a cargo room height Hr. As the results, it is possible to place and contain a sufficiently large cargo M1 on a large cargo receiving face which is formed by the front and rear cargo boards 12, 13.

Sequentially, the rear cargo board 13 is pulled upward up to a top of the cargo room space with the right and left handles 48, and straps 73 of a pair of hooks 731 which have been previously attached to a back face of the rear cargo board 13 are locked to support posts 302 of a head rest 301 of the rear seat back 3. In this manner, the cargo board 13 can be rotated and held in an area opposed to the back face of the seat back 3, as shown in Fig. 12.

As the results, a bottom wall of the tire house 9 can be completely made open upwardly, and it is possible to stably mount a container, for example, a poly tank M2 which needs to be vertically mounted.

Moreover, it is possible to contain a cargo in a space A which is enclosed by the seat back 3, the front cargo board 12 and the rear cargo board 13. Particularly, in case of carrying an article which is likely to roll, the seat back 3 and the rear cargo board 13 will effectively act as support members.

In case where the upper and lower floor faces f1, f2 are respectively formed by the front cargo board 12 and the rear cargo board 13, the rear cargo board 13 may be upwardly rotated around the front pin parts 331 which are engaged with the upper end stepped sockets 28, as shown in Fig. 6. In this manner, it is possible to enter the cargo M into the space below the rear cargo board 13 or take it out therefrom, and to close the rear cargo board 13 again, thus easily conducting simple operation of entering and taking out the cargo M.

In this embodiment, provided that the rear cargo board 13 is maintained on the lower floor face f2, the handles 48, that is, the right and left operating members are pulled up as they are (the switch member 53 is kept at the retreat position P0), to make their rotation in an idly operated manner. When the backward end of the rear cargo board 13 is rotated upwardly in this state, the rear pin parts 332 of the C-shaped pin 33 are in a projected state. Because the curved part d having a shallow depth (See Fig. 7) is formed in the arc-like diverged part 31 which is bifurcated from the rear groove 29 of the rear guide rail 24, the retreating movement of the rear pin parts 332 which is in sliding contact with the curved part d can be smoothly guided. In this case too, simple operation of entering and taking out the cargo M into and from the space below the rear cargo board 13 can be easily conducted.

As described above, according to the cargo room structure for a vehicle which is applied to the vehicle as shown in Fig. 1, the level of the rear cargo board 13 can be freely adjusted in a vertical direction, by sliding the C-shaped pins 33 at the right and left ends between the engaged position Q1 and the released position Q2, and by switching the front and rear pin parts 331, 332 to be respectively engaged with the lower end hole-like sockets 27 or the upper end stepped sockets 28 of the front and rear guide rails 23, 24. Further, the C-shaped pins 33 which have been engaged with the lower end hole-like sockets 27 or the upper end stepped sockets 28 can be released by the releasing devices 43, thus, enabling mounting position of the rear cargo board 13 to be easily shifted.

According to the cargo room structure for a vehicle which is applied to the vehicle as shown in Fig. 1, cost reduction can be easily achieved, by employing a simple supporting structure that the front cargo board 12 is placed on the upper and lower curved stepped parts 221, 222, which are shelf parts.

According to the cargo room structure for a vehicle which is applied to the vehicle as shown in Fig. 1, the rear cargo board 13 which is the rear partition member is displaced to the lower position. However, on the contrary, the front cargo board 12 may be constructed in such a manner that it is supported by those members similar to the front and rear guide rails 23, 24, and provided with the C-shaped pins 33 and the releasing devices 43, so as to be movable downwardly. Moreover, both the front and rear cargo boards 12, 13 may be so constructed that they are vertically movable by means of the respective front and rear guide rails 23, 24. By employing such structures, it is possible to vertically move the front and rear cargo boards 12, 13 while the cargo M is placed on the cargo receiving face. Therefore, the cargo M can be contained in various storing modes, and hence, usability will be extremely enhanced.

In the above described embodiment, the cargo board 13 can be adjusted in height by shifting in two steps, between the lower end hole-like sockets 27 and the upper end stepped sockets 28 of the front and rear guide rails 23, 24. However, the cargo board structure may be so constructed that the front and rear guide rails 23, 24 are provided with an intermediate stepped socket (not shown) in addition to the lower end hole-like sockets 27 and the upper end stepped sockets 28 for adjusting the height in three steps. In this case too, substantially the same operation and advantage as in the cargo room structure for a vehicle in Fig. 1 can be obtained, and the space can be utilized in various ways in a vertical direction.

In the above described embodiment, the cargo room structure for a vehicle according to the invention is applied to the cargo room in the rear part of the wagon car. However, the invention can be effectively employed in other vehicles of various types provided with cargo rooms in rear parts thereof, such as a commercial car, one-box car or the like.

## Claims

1. A cargo room structure for a vehicle comprising:
a cargo room provided in a rear part of the vehicle;
a pair of side walls opposed to each other in a lateral direction of the vehicle and forming a part of the cargo room;
a cargo room partition member which is engaged with the pair of the side walls so as to bridge the side walls and covers a recess formed on a bottom portion of the cargo room; and
a releasing device having an operating member provided on an upper face of the cargo roompartitionmember, the releasing device being adapted to cause the cargo room partition member to engage the pair of the side wells and release the engagement in association with operation of the operating member, whereby both side parts of the cargo room partition member can be lifted and lowered along guide rails provided at the pair of the side walls.

2. A cargo room structure for a vehicle as claimed in claim 1, **characterized in that** the cargo room partition member is divided in a longitudinal direction of the vehicle into a front partition member and a rear partition member, and
the releasing device is provided on either one of the front partition member and the rear partition member.

3. A cargo room structure for a vehicle as claimed in claim 2, **characterized in that** the cargo roompartitionmember includes a plate-like member, and the releasing device is provided on the rear partition member.

4. A cargo room structure for a vehicle as claimed in any one of claims 2 to 3,
**characterized in that** the pair of the side walls are formed with shelf parts on which the front partition member can be placed.

5. A cargo room structure for a vehicle as claimed in any one of claims 1 to 4,
**characterized in that** the operating member includes right and left operating members provided on the upper face of the cargo room partition member at a determined interval in the lateral direction of the vehicle, the pair of the side walls are formed with lock holes, and the releasing device includes: pin members provided in right and left side parts of the cargo room partition member corresponding to the right and left operating members, the pin members engaged with the lock holes; an urging member for urging the pin members in the lateral direction; and an actuating member engaged with the pin members and adapted to actuate the pin members, in association with the operation of the right and left operating members respectively, thereby to release the pin members from the lock holes.

6. A cargo room structure, for a vehicle as claimed in any one of claims 1 to 5,
**characterized in that** a back seat is provided in front of the cargo room, and
the cargo room partition member is so provided as to rotate in a longitudinal direction of the vehicle with respect to a floor which defines the cargo room, and can be locked to the back seat by holding means, whereby the cargo room partition member can be held at a determined open degree.

7. A cargo room structure for a vehicle as claimed in any one of claims 1 to 6,
**Characterized in that** a second cargo room partition member which can be lifted and lowered in a vertical direction of the vehicle is provided between the back seat and the cargo room partition member.

8. A cargo room structure for a vehicle as claimed in claim 6,
**characterized in that** the cargo room partition member is engaged with the pair of the side walls and adapted to be shifted to at least two positions of an upper step and a lower step, and the holding means can hold the cargo room partit ion member at a determined open degree, while the cargo room partition member is positioned on the lower step.

9. A cargo room structure for a vehicle as claimed in any one of claims 1 to 8 **characterized in that**
each of the guide rails is formed with curved part (d) which curves in the lateral direction of the vehicle, and
the releasing device includes:
pin members which are provided in right and left side parts of the cargo room partition member and adapted to be engaged with the curved part (d); and
an actuating member engaged with the pin members and is capable of switching the pin members between positions where the pin members engage the curved parts (d) and positions where the engagements are released, in association with the operation of the operating member.

## Patentansprüche

1. Laderaumstruktur für ein Fahrzeug, mit:
einem in einem hinteren Teil des Fahrzeugs angeordneten Laderaum;
einem Paar Seitenwände, die sich in einer Seitenrichtung des Fahrzeugs einander gegenüberliegen und einen Teil des Laderaums bilden;
einem Laderaumteilungselement, das mit dem Paar Seitenwänden derart in Eingriff steht, dass die Seitenwände überbrückt werden, und eine Vertiefung abdeckt, die in einem Bodenabschnitt des Laderaums ausgebildet ist; und
einer Ausrückeinrichtung mit einem auf einer oberen Fläche des Laderaumteilungselements angeordneten Betätigungselement, wobei die Ausrückeinrichtung dazu geeignet ist, in Verbindung mit der Betätigung des Betätigungselements zu veranlassen, dass das Laderaumteilungselement mit dem Paar Seitenwänden in Eingriff kommt und der Eingriff dazwischen gelöst wird, so dass beide Seitenteile des Laderaumteilungselements entlang Führungsschienen, die an dem Paar Seitenwänden angeordnet sind, angehoben und abgesenkt werden können.

2. Laderaumstruktur für ein Fahrzeug nach Anspruch 1, **dadurch gekennzeichnet, dass** das Laderaumteilungselement in einer Längsrichtung des Fahrzeugs in ein vorderes Teilungselement und ein hinteres Teilungselement geteilt ist; und
die Ausrückeinrichtung auf dem vorderen oder dem hinteren Teilungselement angeordnet ist.

3. Laderaumstruktur für ein Fahrzeug nach Anspruch 2, **dadurch gekennzeichnet, dass** das Laderaumteilungselement ein plattenförmiges Element aufweist und die Ausrückeinrichtung auf dem hinteren Teilungselement angeordnet ist.

4. Laderaumstruktur für ein Fahrzeug nach einem der Ansprüche 2 bis 3, **dadurch gekennzeichnet, dass** das Paar Seitenwände regalähnliche Teile aufweisen, auf denen das vordere Teilungselement angeordnet werden kann.

5. Laderaumstruktur für ein Fahrzeug nach einem der Ansprüche 1 bis 4, **dadurch gekennzeichnet, dass** das Betätigungselement ein rechtes und ein linkes Betätigungselement aufweist, die auf der oberen Fläche des Laderaumteilungselements in einem vorgegebenen Abstand in der Seitenrichtung des Fahrzeugs angeordnet sind;
wobei das Paar Seitenwände Verriegelungsöffnungen aufweist und die Ausrückeinrichtung aufweist: Stiftelemente, die im rechten und linken Seitenteil des Laderaumteilungselements angeordnet sind, die dem rechten und dem linken Betätigungselement zugeordnet sind, wobei die Stiftelemente dazu geeignet sind, mit den Verriegelungsöffnungen in Eingriff zu kommen; ein Drückerelement zum Drücken der Stiftelemente in die Seitenrichtung; und ein Aktivierungselement, das mit den Stiftelementen in Eingriff steht und in Verbindung mit der Betätigung des rechten bzw. des linken Betätigungselements dazu geeignet ist, die Stiftelemente zu betätigen, um die Stiftelemente von den Verriegelungsöffnungen auszurücken.

6. Laderaumstruktur für ein Fahrzeug nach einem der Ansprüche 1 bis 5, **dadurch gekennzeichnet, dass**
ein Rücksitz vor dem Laderaum angeordnet ist; und
das Laderaumteilungselement derart angeordnet ist, dass es sich in einer Längsrichtung des Fahrzeugs bezüglich eines Bodens dreht, der den Laderaum definiert, und durch eine Halteeinrichtung am Rücksitz verriegelt werden kann, so dass das Laderaumteilungselement in einem vorgegebenen Öffnungsgrad gehalten werden kann.

7. Laderaumstruktur für ein Fahrzeug nach einem der Ansprüche 1 bis 6, **dadurch gekennzeichnet, dass**
ein zweites Laderaumteilungselement, das in einer vertikalen Richtung des Fahrzeugs angehoben und abgesenkt werden kann, zwischen dem Rücksitz und dem Laderaumteilungselement angeordnet ist.

8. Laderaumstruktur für ein Fahrzeug nach Anspruch 6, **dadurch gekennzeichnet, dass**
das Laderaumteilungselement mit dem Paar Seitenwänden in Eingriff steht und dazu geeignet ist, auf mindestens zwei Positionen einer oberen Stufe und einer unteren Stufe eingestellt zu werden, wobei die Halteeinrichtung das Laderaumteilungselement auf einem vorgegebenen Öffnungsgrad halten kann, während das Laderaumteilungselement auf die untere Stufe eingestellt ist.

9. Laderaumstruktur für ein Fahrzeug nach einem der Ansprüche 1 bis 8, **dadurch gekennzeichnet, dass**
jede der Führungsschienen einen gekrümmten Abschnitt (d) aufweist, der in der Seitenrichtung des Fahrzeugs gekrümmt ist; und
die Ausrückeinrichtung aufweist:
Stiftelemente, die im rechten und linken Seitenteil des Laderaumteilungselements angeordnet und dazu geeignet sind, mit dem gekrümmten Abschnitt (d) in Eingriff zu kommen; und
ein Aktivierungselement, das mit den Stiftelementen in Eingriff steht und dazu geeignet ist, die Stiftelemente in Verbindung mit der Betätigung des Betätigungselements zwischen Positionen zu schalten, in denen die Stiftelemente mit den gekrümmten Abschnitten (d) in Eingriff stehen, und Positionen, in denen die Eingriffe freigegeben sind.

## Revendications

1. Structure d'espace de chargement pour un véhicule comprenant :
un espace de chargement fourni dans une partie arrière du véhicule ;
une paire de parois latérales opposées l'une à l'autre dans une direction latérale du véhicule et formant une partie de l'espace de chargement ;
un élément de cloisonnement d'espace de chargement qui est en prise avec la paire de parois latérales de manière à relier les parois latérales et recouvre un espace vide formé sur une partie du bas de l'espace de chargement ; et
un dispositif de relâchement ayant un élément de fonctionnement fourni sur une face supérieure de l'élément de cloisonnement d'espace de chargement, le dispositif de relâchement étant adapté pour amener l'élément de cloisonnement d'espace de chargement à mettre en prise la paire de parois latérales et relâcher la prise en association avec le fonctionnement de l'élément de fonctionnement, moyennant quoi les deux parties latérales de l'élément de cloisonnement d'espace de chargement peuvent être soulevées et abaissées le long de rails de guidage fournis au niveau de la paire de parois latérales.

2. Structure d'espace de chargement pour un véhicule selon la revendication 1, **caractérisée en ce que** l'élément de cloisonnement d'espace de chargement est divisé dans une direction longitudinale du véhicule en un élément de cloisonnement avant et un élément de cloisonnement arrière, et
le dispositif de relâchement est fourni sur l'un ou l'autre de l'élément de cloisonnement avant et l'élément de cloisonnement arrière.

3. Structure d'espace de chargement pour un véhicule selon la revendication 2, **caractérisée en ce que** l'élément de cloisonnement d'espace de chargement comprend un élément ressemblant à une plaque, et le dispositif de relâchement est fourni sur l'élément de cloisonnement arrière.

4. Structure d'espace de chargement pour un véhicule selon l'une quelconque des revendications 2 à 3,
**caractérisée en ce que** la paire de parois latérales sont formées avec des parties d'étagères sur lesquelles l'élément de cloisonnement avant peut être placé.

5. Structure d'espace de chargement pour un véhicule selon l'une quelconque des revendications 1 à 4,
**caractérisée en ce que** l'élément de fonctionnement comprend des éléments de fonctionnement droit et gauche fournis sur la face supérieure de l'élément de cloisonnement d'espace de chargement à un intervalle déterminé dans la direction latérale du véhicule, la paire de parois latérales sont formées avec des trous de verrouillage, et le dispositif de relâchement comprend : des éléments de goupilles fournis dans des parties latérales droite et gauche de l'élément de cloisonnement d'espace de chargement correspondant aux éléments de fonctionnement droit et gauche, les éléments de goupilles adaptés pour être en prise avec les trous de verrouillage ; un élément de poussée destiné à pousser les éléments de goupilles dans la direction latérale; et un élément de déplacement en prise avec les éléments de goupilles et adapté pour déplacer les éléments de goupilles, en association avec le fonctionnement des éléments de fonctionnement droit et gauche, respectivement, pour relâcher ainsi les éléments de goupilles des trous de verrouillage.

6. Structure d'espace de chargement pour un véhicule selon l'une quelconque des revendications 1 à 5,
**caractérisée en ce qu'**un siège arrière est fourni devant l'espace de chargement, et
l'élément de cloisonnement d'espace de chargement est fourni de manière à tourner dans une direction longitudinale du véhicule par rapport à un fond qui définit l'espace de chargement, et peut être verrouillé au siège arrière grâce à un moyen de maintien, moyennant quoi l'élément de cloisonnement d'espace de chargement peut être maintenu à un degré d'ouverture déterminé.

7. Structure d'espace de chargement pour un véhicule selon l'une quelconque des revendications 1 à 6,
**caractérisée en ce qu'**un second élément de cloisonnement d'espace de chargement qui peut être soulevé et abaissé dans une direction verticale du véhicule est fourni entre le siège arrière et l'élément de cloisonnement d'espace de chargement.

8. Structure d'espace de chargement pour un véhicule selon la revendication 6,
**caractérisée en ce que** l'élément de cloisonnement d'espace de chargement est en prise avec la paire de parois latérales et adapté pour être mis dans au moins deux positions parmi une situation supérieure et une situation inférieure, et le moyen de maintien peut maintenir l'élément de cloisonnement d'espace de chargement à un degré d'ouverture déterminé, tandis que l'élément de cloisonnement d'espace de chargement est disposé dans la situation inférieure.

9. Structure d'espace de chargement pour un véhicule selon l'une quelconque des revendications 1 à 8, **caractérisée en ce que**
chacun des rails de guidage est formé avec une partie incurvée (d) qui s'incurve dans la direction latérale du véhicule, et
le dispositif de relâchement comprend :
des éléments de goupilles qui sont fournis dans les parties latérales droite et gauche de l'élément de cloisonnement d'espace de chargement et adaptés pour être en prise avec la partie incurvée (d) ; et
un élément de déplacement en prise avec les éléments de goupilles et est capable de faire varier les éléments de goupilles entre des positions où les éléments de goupilles mettent en prise les parties incurvées (d) et des positions où les prises sont relâchées, en association avec le fonctionnement de l'élément de fonctionnement.
